# EUROPEAN PATENT APPLICATION

(11) **EP 3 854 493 A1**
(43) Date of publication of application: **28.07.2021**
(21) Application number: 21150076.4
(22) Date of filing: 04.01.2021
(51) Int. Cl.: B09B 3/00, B09B 5/00, B29B 17/02, B29L 31/48

(54) **USED PAPER DIAPER PROCESSING METHOD AND APPARATUS**

(30) Priority: 21.01.2020 JP 2020007638
(71) Applicant: Panasonic Corporation, Kadoma-shi Osaka 571-8501 (JP)
(72) Inventor: MATSUDA, Genichiro, Osaka, 540-6207 (JP); KATAOKA, Hidenao, Osaka, 540-6207 (JP); HINO, Naofumi, Osaka, 540-6207 (JP)
(74) Representative: Eisenführ Speiser

(57) **Abstract**

A processing liquid is generated by mixing a chemical and water in a processing liquid generation region disposed below an inner tank. By further supplying water to raise a water level, the processing liquid is supplied from below the inner tank. This prevents a used paper diaper from coming into contact with water containing no chemical.

## Description

### Background of the Invention

### Field of the Invention

The present disclosure relates to a used paper diaper processing method and apparatus that reduces weight by removing water from a superabsorbent polymer contained in a used paper diaper.

More specifically, the present disclosure relates to a used paper diaper processing method and apparatus in which a water absorption function of a superabsorbent polymer that absorbs water contained in excrement is lowered and water is removed by mixing the superabsorbent polymer and a chemical containing divalent metal ions, and in which weight is reduced by dehydration after an amount of water contained in a used paper diaper is lowered.

### Description of the Related Art

Since a used paper diaper contains a large amount of water, when a large amount of used paper diapers is handled in a nursing home etc., weight of the paper diapers may be an issue. The paper diaper contains a superabsorbent polymer and can hold a large amount of water. Moreover, once the water has been absorbed by the superabsorbent polymer, it is difficult to remove the water as it is.

Therefore, a used paper diaper processing apparatus has been proposed in which a used paper diaper soaked in water is separated and disassembled into a water-soluble substance and an insoluble substance, and the separated and disassembled water-soluble substance is discharged to a sewage processing facility along with sewage, thereby reducing weight and volume of the paper diaper (see Patent Document 1).

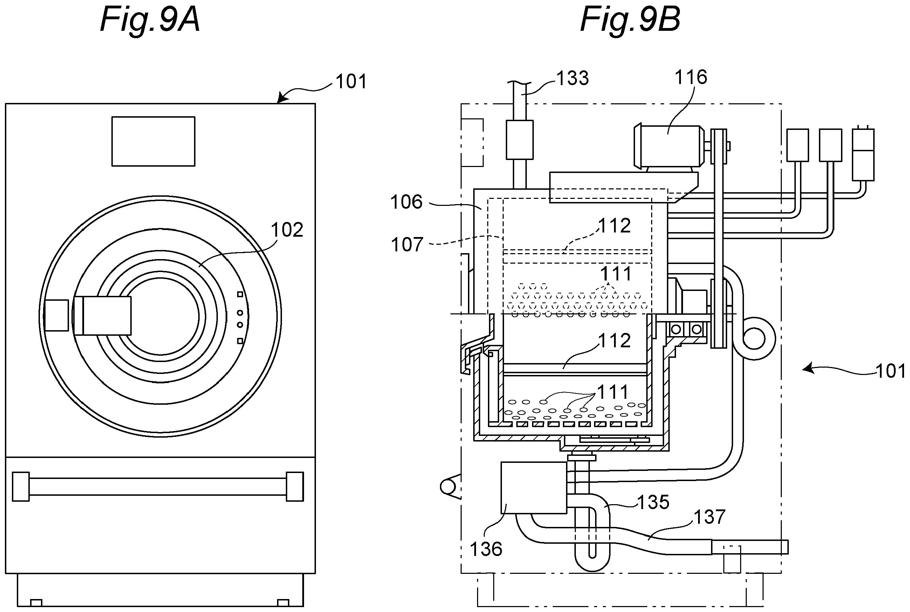

Figs. 9A and 9B show an example of a conventional used paper diaper processing apparatus 101 described in Patent Document 1. Fig. 9A is a front view of the conventional used paper diaper processing apparatus 101. Fig. 9B shows a side view of the processing apparatus 101. In Figs. 9A and 9B, 102 indicates an opening/closing lid, 106 indicates an outer drum, 107 indicates a rotating drum, 111 indicates a through hole, 112 indicates a stirring protrusion, 116 indicates a motor, 133 indicates a water supply pipe, 135 and 137 indicate discharge pipes, and 136 indicates an opening/closing valve.

Next, operation of the conventional used paper diaper processing apparatus 101 will be described.

A used paper diaper is put into the rotating drum 107 through the opening/closing lid 102.

Next, after a predetermined amount of water (that is, an amount by which a lower portion of the rotating drum 107 is immersed) is supplied from the water supply pipe 133 into the outer drum 106, the motor 116 is started to rotate the rotating drum 107, and a water flow is generated inside the rotating drum 107. As a result, the paper diaper in the rotating drum 107 can be separated and disassembled while being immersed in the water. At this time, because of the stirring protrusions 112, stirring processing of the paper diaper is promoted, and separation and dismantling processing is promoted. The separated and dismantled paper diaper passes through the discharge pipes 135 and 137 via the through holes 111 and is drained to a sewer pipe connected to a sewage processing facility.

However, in the used paper diaper processing apparatus 101 described in Patent Document 1, the paper diaper is separated and disassembled in a processing step, and a fiber component of the disassembled paper diaper is directly discharged to the sewage processing facility. Accordingly, there is a problem that a load for processing the fiber component of the disassembled paper diaper increases in wastewater processing in the sewage processing facility. Therefore, upon discharging to the sewer pipe, it is necessary to introduce an apparatus for removing the fiber component of the dismantled paper diaper by a filter.

Therefore, as another processing system, a used paper diaper processing method has been proposed in which water is removed from a superabsorbent polymer by reacting with a chemical containing divalent metal ions, thereby reducing weight of a paper diaper (see Patent Document 2).

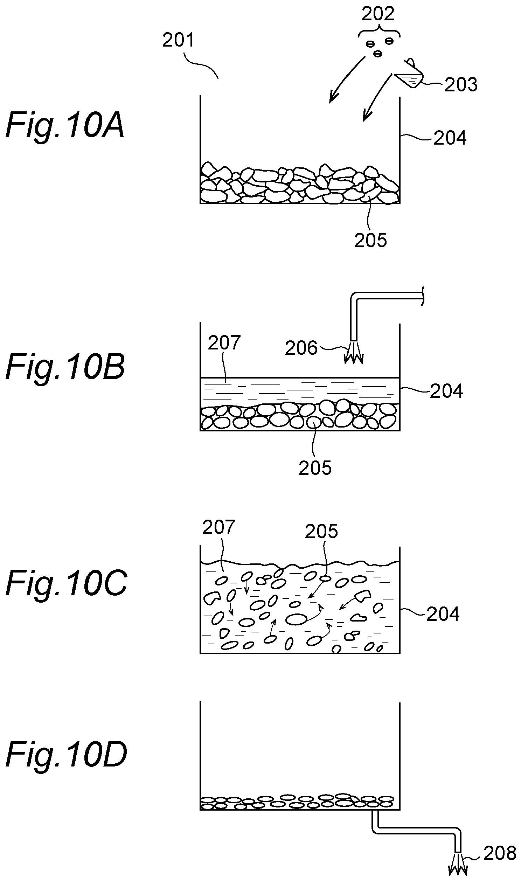

Figs. 10A-10D show an example of a conventional used paper diaper processing apparatus 201 described in Patent Document 2. In Figs. 10A-10D, 202 indicates lime, 203 indicates hypochlorous acid, 204 indicates a processing tank, 205 indicates a used paper diaper, 206 indicates water, 207 indicates a liquid, and 208 indicates wastewater.

Subsequently, operation of the conventional used paper diaper processing apparatus 201 will be described.

First, as shown in Fig. 10A, the lime 202, the hypochlorous acid 203, and the used paper diaper 205 are put into the processing tank 204.

Next, as shown in Figs. 10B and 10C, the water 206 is put into the processing tank 204 so that stirring is possible, and then the stirring is performed for a predetermined time. When the stirring is continued in this state, Ca ions contained in the lime react with the superabsorbent polymer of the paper diaper, and water contained in the superabsorbent polymer is removed.

Finally, as shown in Fig. 10D, the liquid 207 in the processing tank 204 is discharged out of the processing tank 204 and dehydrated, and then the wastewater 208 is discharged.

### Prior Art Documents

### Patent Documents

Patent Document 1: Japanese Patent Laid-open Publication No. 2001-104929
Patent Document 2: Japanese Patent Laid-open Publication No. 2010-84031

However, in the used paper diaper processing apparatus 201 described in Patent Document 2, the lime 202, the hypochlorous acid 203, and the used paper diaper 205 are put into the processing tank 204, and then the water 206 is put thereinto from an upper portion of the processing tank 204. At this time, the water 206 is not mixed with the lime 202 and comes into direct contact with the used paper diaper 205. Thereby, a large amount of water is absorbed by the superabsorbent polymer inside the used paper diaper 205, and the used paper diaper 205 greatly expands. In that case, even if stirring processing is performed, the used paper diaper 205 is expanded, so that stirring processing cannot be performed well. As a result, it is necessary that stirring time for removing the water contained in the superabsorbent polymer is sufficiently long, which causes an issue that processing time becomes long. In addition, there is an issue that the number of used paper diapers 205 that can be put into the processing tank 204 at one time is limited.

### Summary of the Invention

In view of such points, one non-limiting and exemplary embodiment provides a used paper diaper processing method and apparatus, in which a used paper diaper is stirred together with a chemical containing divalent metal ions, and dehydration processing is performed after water is removed by lowering a water absorption function of a superabsorbent polymer, so that an amount of water contained in the used paper diaper is lowered and weight is reduced. In the used paper diaper processing method and apparatus, by reducing the weight without separating and disassembling the paper diaper and by implementing in the processing apparatus a series of operations up to taking-out operation of the used paper diaper after the processing, work and hygiene burdens on an operator at a nursing home and the like are reduced without increasing a burden of wastewater processing in a sewage processing facility.

In other words, the non-limiting and exemplary embodiment provides the used paper diaper processing method and apparatus capable of performing a series of operations of reducing the weight of the used paper diaper and storing the used paper diaper in a discharge container without bothering the operator.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

In one general aspect, the techniques disclosed here feature: a used paper diaper processing method comprising:
putting a chemical and a used paper diaper into a processing tank that processes the used paper diaper;
supplying water to a processing liquid generation region located in an outer tank and below an inner tank of the processing tank;
generating a processing liquid by mixing the chemical and the water in the processing liquid generation region;
supplying the processing liquid into the inner tank from below the inner tank by further supplying water to the processing liquid generation region to raise a water level of the processing liquid;
performing stirring processing by rotating the inner tank of the processing tank;
discharging the processing liquid from the processing tank after performing the stirring processing;
dehydrating the used paper diaper processed in the processing tank by rotating the inner tank of the processing tank from which the processing liquid has been discharged; and
taking out the used paper diaper processed and dehydrated in the processing tank from below the processing tank.

In another general aspect, the techniques disclosed here feature: a used paper diaper processing apparatus comprising a processing tank that processes a used paper diaper,
wherein the processing tank has a cylindrical inner tank that stores the used paper diaper and has a plurality of through holes smaller than the paper diaper on both a side surface thereof and a bottom surface thereof, and an outer tank that surrounds the side surface and the bottom surface of the inner tank,
the used paper diaper processing apparatus further comprising:
a liquid supply unit that supplies water to the processing tank from between the inner tank and the outer tank;
a liquid discharge unit that discharges the processing liquid from the processing tank; and
a take-out unit that takes out the paper diaper processed in the processing tank below the processing tank,
the used paper diaper processing apparatus further comprising a rotation drive unit that rotates the inner tank,
wherein the bottom surface at a lower end of the inner tank or the side surface near the bottom surface thereof is used as a liquid introduction portion, and
a space for a processing liquid generation region in which a processing liquid is generated by mixing the water and the chemical supplied from the liquid supply unit is provided in the outer tank and below the inner tank, and by supplying water to the processing liquid generation region to raise a water level of the processing liquid, the processing liquid is supplied into the inner tank from the liquid introduction portion of the inner tank,
the used paper diaper processing apparatus further comprising an opening/closing unit that discharges the paper diaper processed in the processing tank from a bottom of the processing tank to the take-out unit.

According to the used paper diaper processing method and apparatus according to the above aspect of the present disclosure, even when water is put into the processing tank after the used paper diaper is put into the processing tank, the chemical and the water are mixed in the processing liquid generation region disposed in the outer tank and below the inner tank to generate the processing liquid, and then the processing liquid is supplied to the inner tank from below. Therefore, the used paper diaper processing can be performed while water containing no chemical does not directly come into contact with the used paper diaper to expand the used paper diaper. As a result, water contained in a superabsorbent polymer can be efficiently removed, and work and hygiene burdens on an operator can be reduced. In other words, it is possible to perform a series of operations of reducing weight of the used paper diaper and storing the used paper diaper in a discharge container without bothering the operator.

### Brief Description of the Drawings

These and other aspects and features of the present disclosure will become clear from the following description taken in conjunction with the embodiments thereof with reference to the accompanying drawings, in which:
Fig. 1A is a side sectional view showing a configuration of a used paper diaper processing apparatus according to a first embodiment of the present disclosure;
Fig. 1B is a side sectional view showing a configuration of a used paper diaper processing apparatus according to a modification of the first embodiment of the present disclosure;
Fig. 2 is a flowchart showing a used paper diaper processing method according to the first embodiment of the present disclosure;
Fig. 3 is a side sectional view showing a state in which used paper diapers are disposed in a processing tank and a processing liquid is generated in a processing liquid generation region in the used paper diaper processing apparatus according to the first embodiment of the present disclosure;
Fig. 4 is a side sectional view showing a state in which the used paper diapers are disposed in the processing tank and stirring processing is performed in the used paper diaper processing apparatus according to the first embodiment of the present disclosure;
Fig. 5 is a side sectional view showing a state in which an inner tank is rotated at a high speed and dehydration processing is performed in the first embodiment of the present disclosure;
Fig. 6 is a side sectional view showing a state in which a bottom of the processing tank is opened and taking-out operation of the used paper diapers after processing is performed in the used paper diaper processing apparatus according to the first embodiment of the present disclosure;
Fig. 7 is a flowchart showing a used paper diaper processing method according to a second embodiment of the present disclosure;
Fig. 8 is a side sectional view showing a configuration of a used paper diaper processing apparatus according to the second embodiment of the present disclosure;
Figs. 9A and 9B are sectional views of a conventional used paper diaper processing apparatus; and
Figs. 10A-10D are sectional views of a conventional used paper diaper processing apparatus.

### Detailed Description

### First embodiment

Hereinafter, a used paper diaper processing apparatus 1 according to an embodiment of the present disclosure will be described in detail with reference to the drawings. In the drawings, the same or corresponding parts are denoted by the same reference numerals and description thereof will not be repeated. Note that, in order to make the explanation easy to understand, a configuration is shown in a simplified or schematic manner, or some constituent members are omitted in the drawings referred to below. Further, a dimensional ratio between the constituent members shown in each drawing does not necessarily indicate an actual dimensional ratio.

### [Overall configuration]

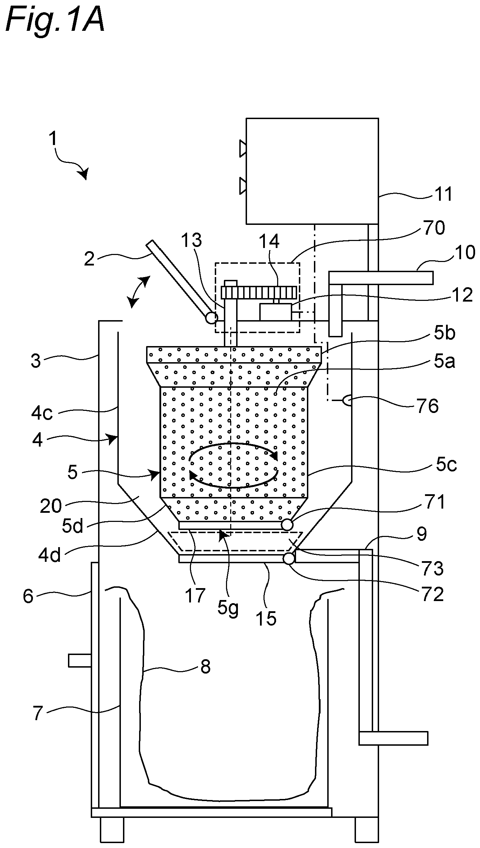

First, an overall configuration of the used paper diaper processing apparatus 1 will be described. Fig. 1A is a side sectional view showing a configuration of the used paper diaper processing apparatus 1 according to the first embodiment of the present disclosure.

The used paper diaper processing apparatus 1 includes at least a processing tank 20, a liquid supply unit 10, a liquid discharge unit 9, and a take-out unit 6. More specifically, the used paper diaper processing apparatus 1 further includes a loading door 2, an apparatus main body 3, a storage container 7, a disposal bag 8, a control apparatus 11, and a rotation drive unit 70.

The processing tank 20 for processing a used paper diaper is disposed in an upper portion of the apparatus main body 3, and includes, for example, a cylindrical outer tank 4 and a cylindrical inner tank 5 that can store a used paper diaper 18. The inner tank 5 is disposed in the outer tank 4.

The inner tank 5 is configured so that an upper portion thereof is an upper conical portion 5b configured as a wide mouth to make it easier to put the used paper diaper 18 thereinto, a middle portion thereof is a cylindrical portion 5c that follows the upper conical portion 5b, and a lower portion thereof is a conical tapered portion 5d that narrows toward a bottom surface from the cylindrical portion 5c.

The outer tank 4 is configured so that an upper to middle portion thereof is a cylindrical portion 4c and a lower portion thereof is a conical tapered portion 4d that narrows toward a bottom surface from the cylindrical portion 4c, as in a case of the conical tapered portion 5d. The outer tank 4 surrounds a side surface and the bottom surface of the inner tank 5.

In the outer tank 4 below a bottom surface of the inner tank 5, there is a truncated cone-shaped space that narrows downward for a processing liquid generation region 73. In the processing liquid generation region 73, water and a chemical for removing water contained in a superabsorbent polymer are mixed to generate a processing liquid 19.

The loading door 2 is attached to the upper portion of the apparatus main body 3 so as to be openable and closable. The used paper diaper 18 is put into the inner tank 5 by opening the loading door 2.

The outer tank 4 is a container that can store water. Water can be stored by introducing water from the liquid supply unit 10 into the processing tank 20.

Inside the outer tank 4, the cylindrical inner tank 5 having a plurality of through holes 5a on both the side surface and the bottom surface is disposed. The bottom surface of the inner tank 5 with the through holes or the side surface thereof with the through holes near the bottom surface functions as a liquid introduction portion 5g for introducing a liquid into the inner tank 5, as will be described later.

The liquid supply unit 10 is attached inside the outer tank 4 toward a gap between the outer tank 4 and the inner tank 5, so that the supplied water can be stored directly in the processing liquid generation region 73 without passing through the inner tank 5. The chemical may be introduced into the processing tank 20 from the liquid supply unit 10 or from the inner tank 5.

As a minimum size of the processing liquid generation region 73, it is sufficient if there is a space that can secure a sufficient amount of liquid for the chemical to dissolve. If the chemical is calcium chloride, it has a dissolution rate of 59.5 g/100 mL (0°C) even at 0°C. As an example, when 50g to 60g of calcium chloride is added, even if a margin is 3, a minimum space size of the processing liquid generation region 73 may be about 300 ml.

With such a configuration, when water is supplied from the liquid supply unit 10 after the chemical is introduced, the water and the chemical are mixed in the processing liquid generation region 73 to generate the processing liquid 19. Further, when water is continuously supplied from the liquid supply unit 10, a water level (that is, a liquid level) of the processing liquid 19 in the processing tank 20 rises, so that the processing liquid 19 can be supplied into the inner tank 5 from the liquid introduction portion 5g at a lower end of the inner tank 5. In other words, when the liquid is supplied into the inner tank 5, the processing liquid 19 instead of water is supplied into the inner tank 5 from the lower end of the inner tank 5, that is, the bottom surface of the inner tank 5 with the through holes or the side surface thereof with the through holes near the bottom surface, instead of from an upper end opening of the inner tank 5. As a result, since the processing liquid 19 contains the chemical, the superabsorbent polymer contained in the used paper diaper 18 does not expand with water. In other words, the water other than the processing liquid 19 is not directly supplied to the used paper diaper 18 in the inner tank 5 from the upper end opening of the inner tank 5, and the superabsorbent polymer contained in the used paper diaper 18 does not expand with the water.

In this way, in order to prevent the superabsorbent polymer contained in the used paper diaper 18 from expanding with the water, when the liquid is supplied to the inner tank 5, the liquid is supplied only from the lower end of the inner tank 5. So to speak, the lower end of the inner tank 5 is configured as the liquid introduction portion 5g, and the liquid is prevented from being introduced into the inner tank 5 from a portion other than the lower end.

Further, the liquid in the outer tank 4 is discharged to the outside by using the liquid discharge unit 9.

Further, the inner tank 5 is rotatably connected to the rotation drive unit 70. The rotation drive unit 70 is rotatably driven under the control of the control apparatus 11 for stirring processing and dehydration processing. As an example, the rotation drive unit 70 includes a shaft 13 fixed to the inner tank 5 along a rotation axis of the inner tank 5, a belt 14 that engages with the shaft 13 to rotate the shaft 13, and a motor 12 having a rotating shaft to which a gear engaging with the belt 14 is fixed. As a result, it is possible to rotate the inner tank 5 with respect to the outer tank 4 by driving the motor 12 under the control of the control apparatus 11. As an example, the rotation axis of the inner tank 5 can be disposed along a vertical direction.

An outer tank bottom 15 and an inner tank bottom 17 can be opened and closed around rotation axes by hinges 71 and 72 as an example of an opening/closing unit with respect to the outer tank 4 and the inner tank 5, respectively. The take-out unit 6 is disposed below the processing tank, that is, in a lower portion of the apparatus main body 3 below the outer tank bottom 15 and the inner tank bottom 17. The inner tank bottom 17 constitutes the bottom surface of the inner tank 5 with the through holes.

A processed paper diaper can be taken out from the take-out unit 6. Inside the take-out unit 6, the storage container 7 to which the disposal bag 8 is attached is placed. The disposal bag 8 is placed immediately below the inner tank bottom 17. By making an opening of the storage container 7 larger than an opening at a bottom of the inner tank 5, the processed paper diaper can be smoothly dropped into the disposal bag 8 of the storage container 7.

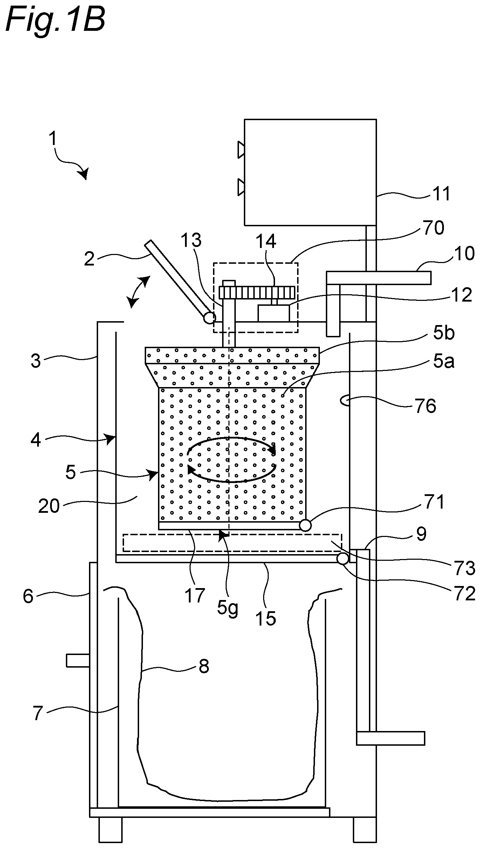

As shown in Fig. 1B, the tapered portions 4d and 5d need not be formed onto the lower portions of the outer tank 4 and the inner tank 5. In an example of Fig. 1B, a space for the processing liquid generation region 73 in the outer tank 4 below the bottom surface of the inner tank 5 is a cylindrical space, instead of a truncated cone-shaped space that narrows downward. On the other hand, by forming the tapered portions 4d and 5d as shown in Fig. 1A, it is possible to reduce diameters of the outer tank bottom 15 and the inner tank bottom 17, respectively, and a space required for opening and closing the hinges 71 and 72 around the rotation axes of the hinges 71 and 72 can be reduced. As a result, more processed diapers can be stored in the storage container 7.

### [Operation]

Next, processing operation of the used paper diaper processing apparatus 1 will be described.

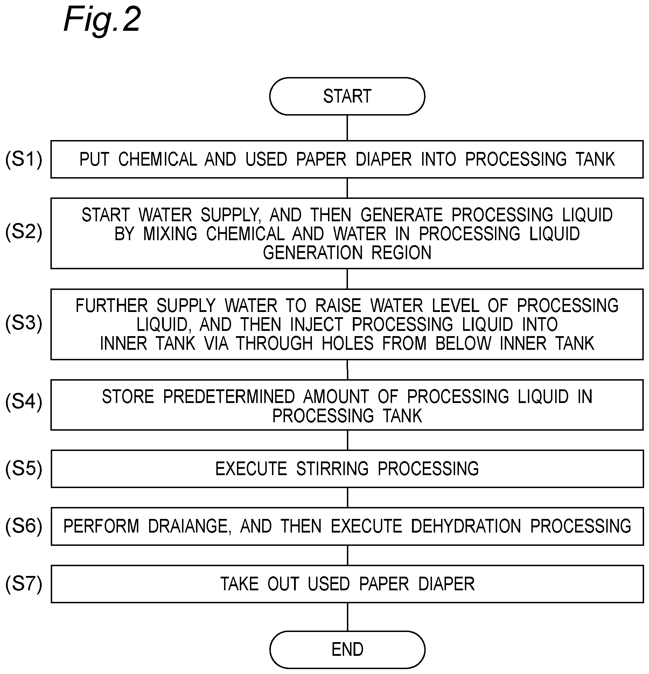

First, an entire processing flow will be described with reference to Fig. 2.

In step S1 of Fig. 2, a chemical for lowering a water absorption function of a superabsorbent polymer contained in the used paper diaper 18 and the used paper diaper 18 are put into the processing tank 20.

Next, in step S2 of Fig. 2, water supply from the liquid supply unit 10 to the processing liquid generation region 73 is started, and the processing liquid 19 is generated in the processing liquid generation region 73 by mixing the chemical and the water in the processing liquid generation region 73 in the outer tank 4.

Next, in step S3 of Fig. 2, when water is further supplied to the processing liquid generation region 73 in the outer tank 4, a water level of the processing liquid 19 in the outer tank 4 rises. The processing liquid 19 in the outer tank 4 is injected into the inner tank 5 from the liquid introduction portion 5g below the inner tank 5 through the through holes 5a.

Then, in step S4 of Fig. 2, the injection of the processing liquid 19 into the inner tank 5 is continued until a predetermined amount of the processing liquid 19 is stored in the processing tank 20.

For the predetermined amount, it is important that the diaper 18 is immersed. As an example of the predetermined amount, it can be at least about half of the inner tank 5, or a degree to which the diaper 18 in the inner tank 5 is almost immersed. If the processing liquid is not put equal to or more than half of the inner tank 5, it will be a waste of volume (the apparatus will become large), so it is preferable to increase the amount of liquid to more than half as one example.

Whether or not a predetermined amount of the processing liquid 19 exists is detected by a water level gauge 76 disposed inside the outer tank 4. The detection information is input to the control apparatus 11.

After the predetermined amount of the processing liquid 19 is stored in the processing tank 20, in step S5 of Fig. 2, stirring processing is performed by rotating the inner tank 5 of the processing tank 20 by the motor 12.

When the stirring processing is completed, drainage is performed in step S6 of Fig. 2, and dehydration processing is performed by rotating the inner tank 5 of the processing tank 20 at a high speed by the motor 12.

Finally, in step S7 of Fig. 2, the processed paper diaper is taken out from the processing tank 20.

Next, details of each processing operation will be described.

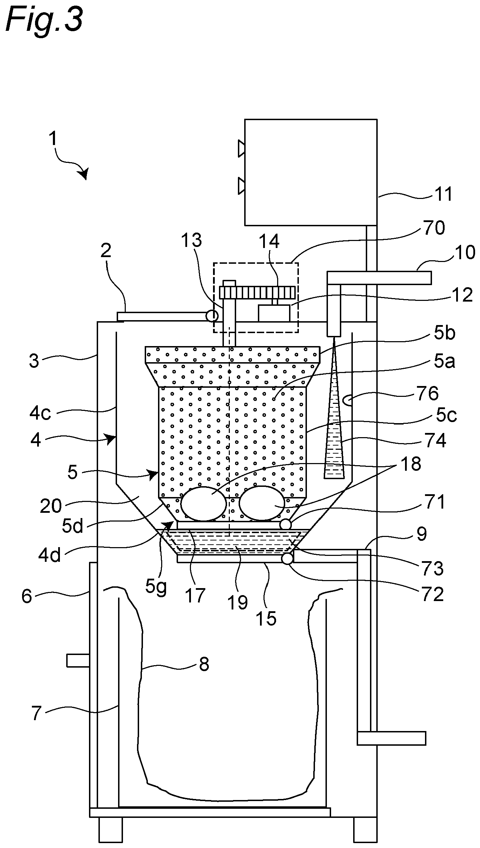

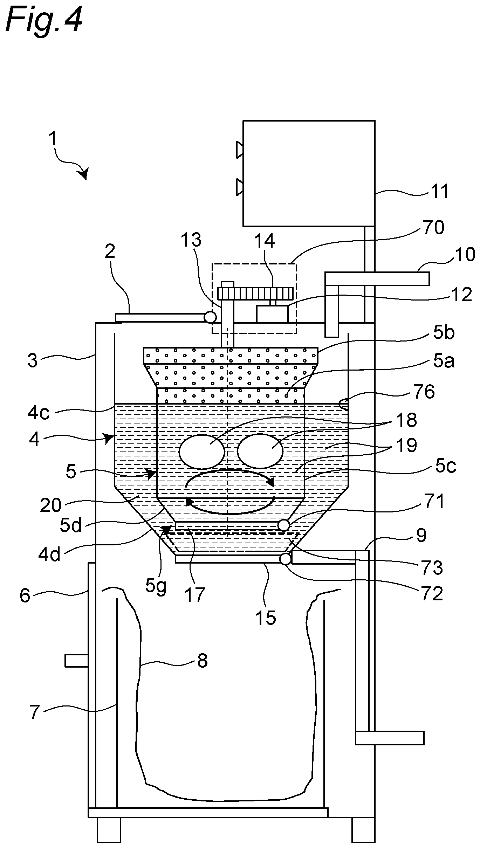

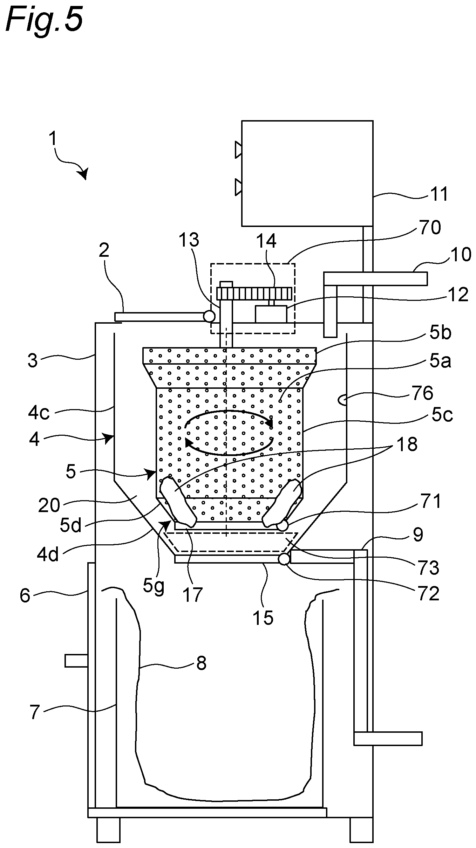

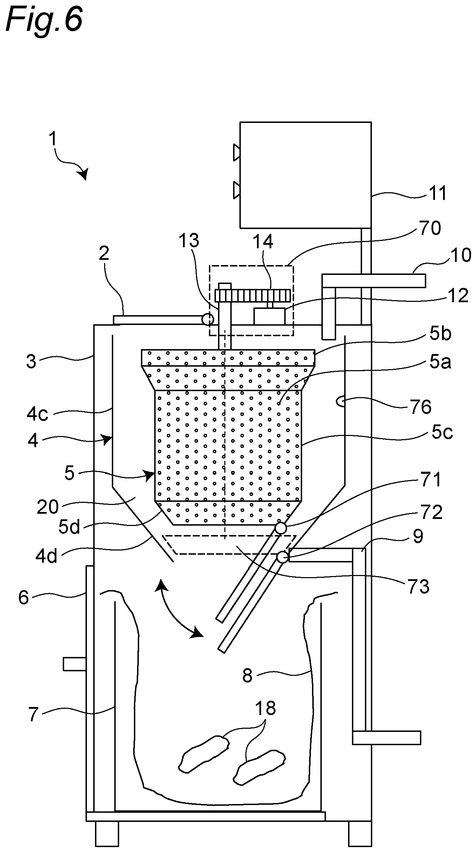

In the following, for convenience of explanation, a state in which, after the chemical and the used paper diapers 18 are put into the inner tank 5, water 74 is supplied from the liquid supply unit 10 into the outer tank 4 of the processing tank 20, and the processing liquid 19 is generated by mixing the chemical and the water in the processing liquid generation region 73 (Fig. 3), a state in which the stirring processing is performed (Fig. 4), a state in which the inner tank 5 is rotated at a high speed and the dehydration processing is performed (Fig. 5), and a state in which the outer tank bottom 15 and the inner tank bottom 17 are opened and operation of taking out the used paper diapers 18 after processing to the take-out unit 6 is performed (Fig. 6) will be described separately.

First, in Fig. 3, the used paper diapers 18 are put into the inner tank 5. Further, the chemical is put into the processing tank 20 from the liquid supply unit 10 or the inner tank 5 (see step S1). When the chemical is put thereinto from the liquid supply unit 10, since the liquid supply unit 10 is disposed between the inner tank 5 and the outer tank 4, the chemical is directly supplied to the processing liquid generation region 73. When the chemical is put thereinto from the inner tank 5, the chemical is supplied to the processing liquid generation region 73 through the through holes 5a on the bottom surface of the inner tank 5.

In this state, when the water 74 is supplied from the liquid supply unit 10, the water and the chemical are mixed in the processing liquid generation region 73 disposed below the inner tank 5, and the processing liquid 19 is generated (see step S2). Further, when the water supply is continued, the water level of the processing liquid 19 in the processing tank 20 rises, so that the processing liquid 19 is supplied into the inner tank 5 from the liquid introduction portion 5g of the inner tank 5 (see step S3). When the processing liquid 19 is supplied into the inner tank 5, the used paper diapers 18 and the processing liquid 19 come into contact with each other. Since the processing liquid 19 contains the chemical, the superabsorbent polymer contained in the used paper diaper 18 does not expand.

In this way, a predetermined amount of the processing liquid 19 is stored in the processing tank 20 (see step S4). As the chemical for lowering the water absorption function of the superabsorbent polymer, a substance containing metal ions can be used as an example, and especially, calcium chloride, lime, or the like containing a divalent metal can be used as an example.

Next, in Fig. 4, the motor 12 is rotationally controlled under the control of the control apparatus 11, and the stirring processing is executed by rotating the inner tank 5 (see step S5). Specifically, when the motor 12 rotates, the shaft 13 rotates via the belt 14, and the inner tank 5 rotates with respect to the outer tank 4. Thereby, the processing liquid 19 and the used paper diapers 18 are stirred. In this stirring processing, instead of continuous rotation, the inner tank 5 repeats rotation for a certain period of time, stop, reverse rotation for a certain period of time, and stop or, alternatively, repeats rotation for a certain period of time, stop, and rotation for a certain period of time in the same direction again. As one example, such repeat is preferable because the stirring tends to progress. One example of a rotation speed is 40 to 160 rpm, and one example of a processing time is about 3 to 30 minutes, for example. Note that an optimum rotation speed depends on a diameter of the cylindrical inner tank 5, and an optimum value described here is, for example, a value when the diameter is about 400 mm. Optimum processing time is, for example, 15 minutes.

When the stirring processing is continued, the superabsorbent polymer of the used paper diaper 18 and, for example, divalent metal ions in the chemical react with each other. Accordingly, water contained in the superabsorbent polymer is removed from the used paper diaper 18, and the removed water is mixed with the processing liquid 19. In the stirring processing here, the processing liquid 19 and the superabsorbent polymer of the used paper diaper 18 only need to react with each other. It is important to perform gentle stirring under the control of the control apparatus 11 so that the used paper diaper 18 is not separated and disassembled by the stirring processing.

By putting the used paper diaper 18 thereinto in a state in which the processing liquid 19 mixed with the chemical is stored in the processing tank 20, it is possible to prevent the used paper diaper 18 from expanding by absorbing water in the inner tank 5. However, since the used paper diaper 18 must be put thereinto after waiting for the processing liquid 19 to be stored in the processing tank 20, there is an issue that usability deteriorates.

In addition, by separately preparing a processing liquid 19 in which water and a chemical are mixed in advance and directly storing the prepared processing liquid 19 in the processing tank 20, it is possible to prevent the used paper diaper 18 from expanding by absorbing water in the inner tank 5. However, it is necessary to separately prepare a tank for preparing the processing liquid 19, which causes an issue that the apparatus becomes complicated and large.

Next, the dehydration processing of the used paper diapers 18 will be described with reference to Fig. 5 (see step S6). After the liquid such as the processing liquid accumulated in the outer tank 4 is drained from the liquid discharge unit 9, the inner tank 5 is rotated at a high speed with respect to the outer tank 4. Thereby, the used paper diapers 18 can be dehydrated, and weight of the used paper diapers 18 can be reduced. Specifically, as an example of a rotation speed, it is preferable to dehydrate at a rotation speed of about 800 to 1300 rpm as one example.

Next, taking-out of the used paper diapers 18 will be described with reference to Fig. 6 (see step S7). When the outer tank bottom 15 and the inner tank bottom 17 are opened via the hinges 71 and 72 in a state in which the dehydration is finished, the used paper diapers 18 fall into the disposal bag 8 installed in the storage container 7. When the used paper diapers 18 are discharged, it can be discharged simply by taking out the take-out unit 6 from the apparatus main body 3 by sliding the take-out unit 6 laterally with respect to the apparatus main body 3, and taking out the disposal bag 8 from the storage container 7.

According to the first embodiment described above, even when water is put into the processing tank 20 after the used paper diapers 18 are put into the processing tank 20, the chemical and the water are mixed in the processing liquid generation region 73 disposed in the outer tank 4 and below the inner tank 5 to generate the processing liquid 19, and then the processing liquid 19 is supplied to the inner tank 5 from below. Therefore, the used paper diaper processing can be performed while water containing no chemical does not directly come into contact with the used paper diaper 18 to expand the used paper diaper 18. As a result, the water contained in the super absorbent polymer can be efficiently removed.

In addition, a fiber portion of the used paper diaper 18 weight-reduced with a chemical containing metal ions or the like remains without being separated and disassembled in the processing tank 20. Therefore, when the liquid is discharged to a sewer pipe or the like, it is not necessary to introduce an apparatus for removing a fiber component of the used paper diaper 18 by a filter.

Further, the used paper diaper 18 after processing does not need to be taken out directly by an operator from above the inner tank, and can be stored in the disposal bag 8 without bothering the operator. Therefore, work and hygiene burdens on the operator can be reduced.

Hence, it is possible to perform a series of operations of reducing the weight of the used paper diapers 18 and storing the used paper diapers in the discharge container without bothering the operator.

Note that, in the first embodiment, the disposal bag 8 is installed in the storage container 7. However, the used paper diaper 18 may be directly stored in the storage container 7 without installing the disposal bag 8.

Further, in order to rotate the inner tank 5, it is possible that the rotating shaft of the motor 12 and the inner tank 5 are directly connected without using the belt 14 and the inner tank 5 is rotationally driven by the motor 12 directly.

### Second embodiment

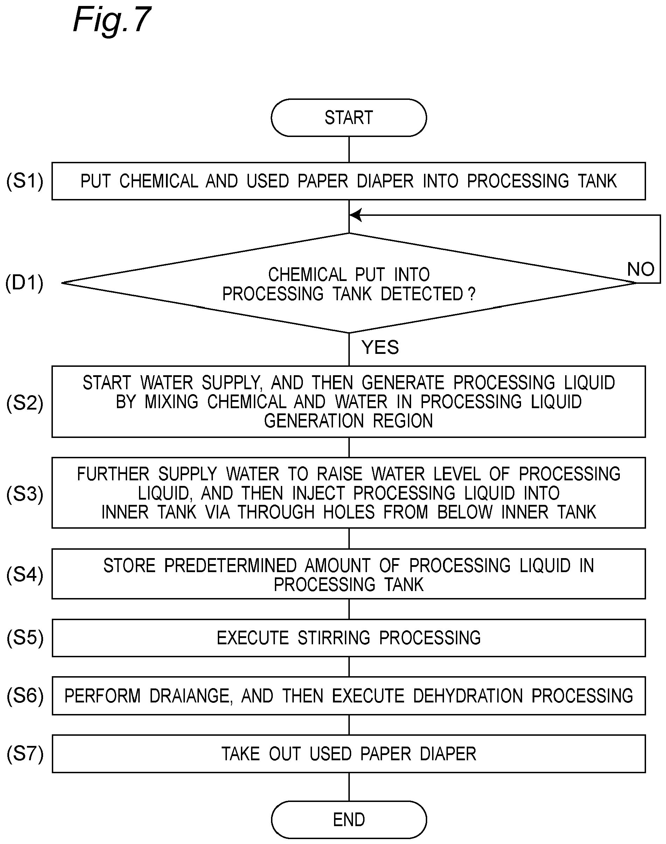

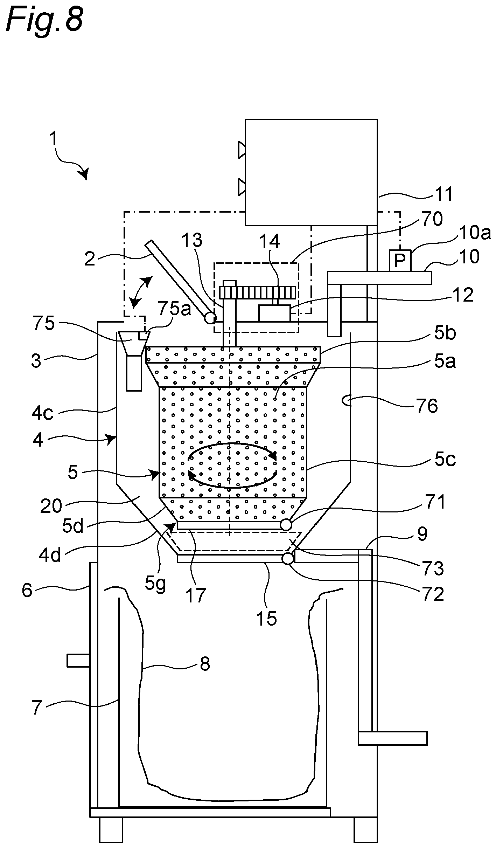

Fig. 7 shows an entire processing flow of a second embodiment of the present disclosure. In addition, Fig. 8 shows an apparatus configuration thereof.

A difference from the first embodiment is that determination to confirm whether input of a chemical has been detected in step D1 in Fig. 7 is added between steps S1 and S2.

In Fig. 8, a difference in the apparatus configuration from the first embodiment is that a chemical inlet 75 with a passage sensor is attached between an upper end opening of the inner tank 5 and an upper end opening of the outer tank 4. In the chemical inlet 75 with the passage sensor, a chemical has been put into a gap between the inner tank 5 and the outer tank 4 from the chemical inlet 75 and passed therethrough can be detected by the passage sensor 75a as an example of a chemical input detection unit. As an example, the passage sensor 75a detects that an object has passed through the chemical inlet 75 by infrared rays or the like.

A passage detection signal from the passage sensor 75a is input to the control apparatus 11.

The liquid supply unit 10 includes, for example, an on-off valve 10a of a water pipe, a pump connected to a water tank, and the like. These on-off valve 10a and pump are not opened/closed or driven by the control apparatus 11 unless the passage detection signal from the passage sensor 75a is input to the control apparatus 11.

Therefore, water supply is not started from the liquid supply unit 10 until the passage detection signal is input to the control apparatus 11. After the passage detection signal is input to the control apparatus 11, the liquid supply unit 10 is opened/closed or driven under the control of the control apparatus 11, and water is supplied from the liquid supply unit 10 into the processing tank 20.

According to the configuration of the second embodiment, the water supply from the liquid supply unit 10 is not started unless the chemical is put thereinto, so that it is possible to prevent forgetting to put the chemical. If the chemical is forgotten to be put and water is supplied, the used paper diaper 18 absorbs a large amount of water and expands. Moreover, if stirring processing is continued as it is, the used paper diaper 18 will be torn and crushed, and a crushed material will be discharged.

According to the second embodiment described above, even if the chemical is forgotten to be put, the water supply from the liquid supply unit 10 cannot be started, so that it is possible to prevent the paper diaper from being separated, disassembled, and then discharged.

Although the embodiments of the present disclosure have been described above, the embodiments are only the illustration for implementing the present disclosure. Therefore, the present disclosure is not limited to the above-described embodiments, and can be implemented by appropriately modifying the embodiments without departing from the spirit thereof.

By appropriately combining arbitrary embodiments or modifications of the above various embodiments or modifications, respective effects can be produced. Additionally, combination between embodiments, combination between working examples, or combination between an embodiment(s) and a working example(s) is possible, and combination between characteristics in different embodiments or working examples is possible as well.

The used paper diaper processing method and apparatus according to the above aspects of the present disclosure can remove water from the used paper diaper by lowering a water absorption function of a superabsorbent polymer that absorbs water contained in excrement to remove water by mixing the superabsorbent polymer and a chemical containing divalent metal ions, and can reduce weight by lowering an amount of water contained in the used paper diaper. Moreover, the used paper diaper processing method and apparatus according to the above aspects of the present disclosure does not require an operator to take out the used paper diaper after processing directly from the inner tank. Thereby, the method and apparatus can reduce work and hygiene burdens on the operator and can be used to improve work in an elderly facility or a childcare facility using large amounts of paper diapers.

Although the present disclosure has been fully described in connection with the embodiments thereof with reference to the accompanying drawings, it is to be noted that various changes and modifications are apparent to those skilled in the art. Such changes and modifications are to be understood as included within the scope of the present disclosure as defined by the appended claims unless they depart therefrom.

## Claims

1. A used paper diaper processing method comprising:
putting a chemical and a used paper diaper into a processing tank that processes the used paper diaper;
supplying water to a processing liquid generation region located in an outer tank and below an inner tank of the processing tank;
generating a processing liquid by mixing the chemical and the water in the processing liquid generation region;
supplying the processing liquid into the inner tank from below the inner tank by further supplying water to the processing liquid generation region to raise a water level of the processing liquid;
performing stirring processing by rotating the inner tank of the processing tank;
discharging the processing liquid from the processing tank after performing the stirring processing;
dehydrating the used paper diaper processed in the processing tank by rotating the inner tank of the processing tank from which the processing liquid has been discharged; and
taking out the used paper diaper processed and dehydrated in the processing tank from below the processing tank.

2. The used paper diaper processing method according to claim 1, further comprising detecting, before the water is supplied to the processing liquid generation region, that the chemical has been put into the processing tank that processes the used paper diaper.

3. A used paper diaper processing apparatus comprising a processing tank that processes a used paper diaper,
wherein the processing tank has a cylindrical inner tank that stores the used paper diaper and has a plurality of through holes smaller than the paper diaper on both a side surface thereof and a bottom surface thereof, and an outer tank that surrounds the side surface and the bottom surface of the inner tank,
the used paper diaper processing apparatus further comprising:
a liquid supply unit that supplies water to the processing tank from between the inner tank and the outer tank;
a liquid discharge unit that discharges the processing liquid from the processing tank; and
a take-out unit that takes out the paper diaper processed in the processing tank below the processing tank,
the used paper diaper processing apparatus further comprising a rotation drive unit that rotates the inner tank,
wherein the bottom surface at a lawer end of the inner tank or the side surface near the bottom surface thereof is used as a liquid introduction portion, and
a space for a processing liquid generation region in which a processing liquid is generated by mixing the water and the chemical supplied from the liquid supply unit is provided in the outer tank and below the inner tank, and by supplying water to the processing liquid generation region to raise a water level of the processing liquid, the processing liquid is supplied into the inner tank from the liquid introduction portion of the inner tank,
the used paper diaper processing apparatus further comprising an opening/closing unit that discharges the paper diaper processed in the processing tank from a bottom of the processing tank to the take-out unit.

4. The used paper diaper processing apparatus according to claim 3, further comprising a chemical input detection unit that detects that the chemical has been put into the processing tank,
wherein after the chemical input detection unit detects that the chemical has been put into the processing tank, the liquid supply unit supplies the water to the processing tank from between the inner tank and the outer tank.
